# EUROPÄISCHE PATENTSCHRIFT

(11) **EP 0 504 682 B1**
(45) Veröffentlichungstag und Bekanntmachung des Hinweises auf die Patenterteilung: **14.12.1994**
(21) Anmeldenummer: 92103889.9
(22) Anmeldetag: 06.03.1992
(51) Int. Cl.: C03C 8/14, C03C 8/10, C03C 1/00

(54) **Schwarzglaspasten für Verglasungen und deren Herstellung**
Black glass pastes for glazings and their production
Pâtes de verre noir pour vitrages et leur production

(30) Priorität: 20.03.1991 IT MI910747
(43) Veröffentlichungstag der Anmeldung: 23.09.1992
(73) Patentinhaber: Bayer S.p.A., 20156 Milano (IT)
(72) Erfinder: Zybell, Paul, I-24044 Dalmine (IT); Bertocchi, Ruggero, I-24042 Capriate S.G. (IT)
(74) Vertreter: Steiling, Lothar, Dr.

(56) Entgegenhaltungen:
- EP-A- 0 377 062
- DE-C- 755 929
- DE-C- 883 693
- FR-A- 2 621 308
- US-A- 4 822 396

## Beschreibung

Die vorliegende Erfindung betrifft glasartige Schwarzpasten, ein Verfahren zu deren Herstellung sowie ihre Verwendung bei der Herstellung von Verglasungen.

Es ist bekannt, daß z.B. bei Kraftfahrzeug-Verglasungen der schwarzfarbene Rand eine allgemeine Voraussetzung für die Möglichkeit der Direktverklebung dieser Glasscheiben auf Kraftfahrzeug-Karosserien ist, um
1. den organischen Kleber vor UV-Strahlung zu schützen und
2. ein optimales Finish in aesthetischer Hinsicht zu gewährleisten.

Bei den Schwarzfarben handelt es sich um glasartige Schmolzprodukte, die mit schwarzen Pigmenten abgemischt und in Pastenform im Siebdruckverfahren auf Kraftfahrzeug-Glasscheiben aufgebracht und anschließend eingebrannt werden, wobei die Brenntemperatur in Nähe des Erweichungspunktes des Glassubstrates liegt, um den Brand des schwarzen Randes mit der Formgebung der Scheibe zu kombinieren.

Besonders hohe Forderungen stellt man an die Qualität der Schwarzglasfarben für beheizbare Heckscheiben, weil der schwarze Rand auf die Floatseite des Glases gedruckt wird. Nach der Aushärtung wird auf die noch ungebrannte schwarze Randschicht in der Regel die elektrische Anschlußleiste, auch "bushbar" genannt, in Form einer Silberpaste im Siebdruck lokal aufgebracht, mit dem Zweck beide Schichten zusammen einzubrennen, wobei die Glasscheiben gleichzeitig in ihre vorgesehene Form gepreßt und anschließend getempert werden. Beim Prozeß der Formgebung darf zudem der schwarze Rand keine Rückstände auf den Presswerkzeugen belassen.

Der Rand der Heckscheibe soll bei einer Auftragsstärke von ca. 15 µm einen intensiven neutralschwarzen Farbton aufweisen, absolut opak sein bei einer geschlossenen, glatten und kompakten Oberfläche, ein gutes Haftvermögen mit dem Glas bewirken bei gleichzeitig guter Ritzfestigkeit und chemischer Beständigkeit. Die silberne Anschlußleiste von ca. 13 µm Stärke darf unter Glas nicht sichtbar sein, sie muß jedoch auf der Druckseite gute Löteigenschaften aufweisen, um eine Abrißfestigkeit des elektrischen Anschlußkontaktes von mindestens 15 kg zu garantieren.

Schwarzglaspasten für Kraftfahrzeug-Front-, Heck- und Seitenscheiben werden seit Jahren angewandt. Sie bestehen in der Regel aus 45 bis 65 Gew.-% eines bleihaltigen Borsilikatglases, das häufig in der Schmelze mit Metalloxiden vorgefärbt wird und einen Erweichungspunkt unter 600°C aufweist. Die Opazität der Glasschicht bzw. die Intensität des Farbtons wird durch Zusatz von 12 bis 35 Gew.-% von Metalloxiden bzw. anorganischen Pigmenten während der Vermahlung der Glasfritte bewirkt. Die Farbkörper werden bei der Wärmebehandlung des Glases, d.h. zwischen 570 bis 720°C, auf der Glasoberfläche angeschmolzen. Für den Siebdruckauftrag der Glaspasten auf das Glas sind bei Zimmertemperatur oder bei erhöhter Temperatur flüssige Medien erforderlich, die je nach angewandter Technik in breiter Auswahl zur Verfügung stehen. Es handelt sich um wasserfreundliche oder Ölmedien, Thermoplaste oder Polymere. Letztere härten unter dem Einfluß ultravioletten Lichtes. Als Zusatz für die Glaspasten der Heckscheiben werden häufig metallisches Zink und Zinnoxid verwendet, um ein Kleben des Schwarzbandfilms auf der Oberfläche der Presswerkzeuge bei der Verformung des Glases zu verhindern (US 4.684.388).

Während der Wärmebehandlung der Heckscheibe laufen in dem ca. 15 µm starken Schwarzbandfilm mehrere Reaktionen ab.

Bis 450°C verdampfen bzw. verbrennen die organischen Zusätze der Medien. Das Glas erreicht schließlich den Erweichungspunkt von etwa 700°C (abhängig von der Glaszusammensetzung), der einerseits für die Formgebung erforderlich ist und andererseits für die Glasmatrix des Schwarzbandes, um den Farbkörper auf der Glasoberfläche zu binden. In dieser Phase können Silberionen der Anschlußleiste durch das Schwarzband migrieren und mit dem Zinnbelag der Floatglasseite unter Einbeziehung der zugesetzten Farboxide reagieren. Dadurch kann sich dann die silberne Anschlußleiste unter Glas im schwarzen Rand deutlich abzeichnen oder die Opazität in diesem Abschnitt reduziert werden. Das Schwarz variiert dadurch im Farbton.

Aufgabe war es daher, eine Schwarzpaste zur Verfügung zu stellen, die die Migration des Silbers während des Brennvorganges verhindert, gleichzeitig die Opazität des schwarzen Randes verbessert und den Schwarzfarbton intensiviert.

Diese Aufgabe konnte mit der erfindungsgemäßen glasartigen Schwarzpaste gelöst werden.

Gegenstand der Erfindung sind Schwarzglaspasten auf der Basis von bleihaltigen Borsilikatgläsern, die dadurch gekennzeichnet sind, daß die Pasten gemahlene, bleihaltige Borsilikatgläser, die zusätzlich zu ihrer oxidischen Zusammensetzung noch Sulfide und/oder Polysulfide aufweisen, schwarze gemahlene Pigmente und bei Zimmertemperatur oder erhöhter Temperatur flüssige Medien enthalten.

Bevorzugt enthält die Schwarzglaspaste 40 bis 75 Gew.-% bleihaltige modifizierte Borsilikatgläser, 10 bis 35 Gew.-% schwarze Pigmente und 15 bis 25 Gew.-% der bei Zimmertemperatur oder erhöhter Temperatur flüssigen Medien.

Die Schwarzglaspaste enthält vorzugsweise zusätzlich 1 bis 10 Gew.-% dunkelfarbiger Schwermetallsulfide, deren thermische Dissoziation über 1.000°C liegt, wie z.B. Bleisulfid.

Der Anteil an Sulfiden und/oder Polysulfiden in den bleihaltigen Borsilikatgläsern beträgt vorzugsweise 0,1 bis 12 Gew.-%, besonders bevorzugt 0,5 bis 8 Gew.-%.

Ein weiterer Gegenstand der Erfindung ist ein Verfahren zur Herstellung der erfindungsgemäßen Schwarzglaspasten auf Basis von bleihaltigen Borsilikatgläsern, welches dadurch gekennzeichnet ist, daß die den bleihaltigen Borsilikatgläsern zugrunde liegenden Ausgangsrohstoffen mit Metallsulfiden und/oder Schwefelpulver und feinem Kohlenstoff gemischt und anschließend das Gemisch geschmolzen wird, die so hergestellte Fritte zusammen mit schwarzen Pigmenten bis zu einer Kornfeinheit < 10 µm vermahlen und dieses gemahlene Produkt mit bei Zimmertemperatur oder erhöhter Temperatur flüssigen Medien zu einer Paste vermischt wird.

Bevorzugt werden 5 bis 30 Gew.-% Schwermetallsulfide, insbesondere Blei-, Eisen- und Zinksulfide, und/oder 0,5 bis 5 Gew.-% Schwefelpulver und 0,5 bis 2 Gew.-% feiner Kohlenstoff mit den entsprechenden Ausgangsrohstoffen der bleihaltigen Borsilikatgläser gemischt.

Die Rohstoffe werden gemeinsam mit den Metallsulfiden und/oder Schwefelpulver und feinem Kohlenstoff vorzugsweise bei 1.200 bis 1.350°C in Abhängigkeit von der Zusammensetzung des Rohstoffgemisches geschmolzen.

Bleihaltige Borsilikatgläser haben im allgemeinen folgende oxidische Zusammensetzung:
54-58 Gew.-% PbO
30-34 Gew.-% SiO₂
8- 9 Gew.-% B₂O₃
3- 4 Gew.-% Al₂O₃
Besonders bevorzugt werden 40 bis 75 Gew.-% der modifizierten, bleihaltigen, gemahlenen Borsilikatgläser und 10 bis 35 Gew.-% der schwarzen, gemahlenen Pigmente mit 15 bis 25 Gew.-% flüssigen Medien, jeweils bezogen auf Gesamtgewicht der Paste, gegebenenfalls bei erhöhter Temperatur vermischt.

Der Effekt der Sulfide und/oder Polysulfide in der Glasmatrix kann zusätzlich durch Zusatz von 1 bis 10 Gew.-% dunkelfarbiger Schwermetallsulfide, deren thermische Dissoziation über 1.000°C liegt, wie z.B. Bleisulfid, unterstützt werden. Bei der Vermahlung des sulfidischen Glases mit schwarzen Spinellfarbkörpern und dem folgenden Anpasten mit flüssigen Medien für den Siebdruckauftrag werden diese Schwermetallsulfide eingesetzt.

Die erfindungsgemäßen Schwarzglaspasten werden bei der Herstellung der schwarzen Ränder auf Verglasungen verwendet.

Die Schwarzglaspasten werden bevorzugt im Siebdruckverfahren auf die Verglasung aufgebracht.

Die erfindungsgemäßen Schwarzglaspasten mit dem Sulfidgehalt im Borsilikatglas bieten wesentliche Vorteile gegenüber den bekannten, weil die Opazität dieser Pasten so hoch ist, daß sie auch bei reduzierten Schichtstärken unter 15 µm noch eine gute Verarbeitungssicherheit aufweisen. Sie erfordern zudem einen geringeren Anteil an Pigmentzusätzen im Vergleich zu sulfidfreien Gläsern. Da das als elektrische Sammelschiene aufgetragene Silber außerdem in einem geringeren Anteil in das erfindungsgemäße Schwarzband diffundiert, werden die Löteigenschaften und das Haftvermögen der Kontakte verbessert.

Von besonderem Vorteil ist jedoch die erheblich erhöhte Sicherheit gegen die Durchlässigkeit von UV-Strahlen und damit der erhöhte Schutz des organischen Klebers für die Direktverklebung des Glases auf die Karosserie.

Die Erfindung soll anhand nachfolgender Beispiele näher erläutert werden, ohne daß hierin eine Einschränkung zu sehen ist.

### Beispiele

### Beispiel 1 (Vergleich)

1 kg einer Rohmischung, bestehend aus
29,6 Gew.-% Quarzmehl
3,2 Gew.-% Aluminiumoxid
14,7 Gew.-% Borsäure
52,5 Gew.-% Bleioxid
wird in einem Schamottetiegel bei ca. 1.300°C über 25 min homogen erschmolzen. Diese Fritte dient als Ausgangsmaterial für die Vermahlung mit 25 % eines schwarzen Spinellfarbkörpers auf der Basis Cr/Cu/Fe/Co bis zu einer Korngröße < 10 µm. Anschließend wird das Mahlgut mit einem Ölmedium angepastet. Die so vorbereitete Paste wird über ein Auftragssieb von 77 Maschen/cm auf die Floatseite einer 4 mm starken Glasscheibe aufgetragen, getrocknet und dann mit einer 75 %igen Silberpaste wieder über ein Auftragssieb von 77 Maschen/cm lokal ein zweites Mal beschichtet und getrocknet. Die Glasplatte wird anschließend bei 680°C über 4 min gebrannt und dann im Pressluftstrom getempert. Auf der in dieser Weise hergestellten Platte zeichnet sich die aufgetragene Silberfläche unter Glas deutlich ab. Die Paste ist insoweit industriell nicht verwendbar.

### Beispiel 2 (erfindungsgemäß)

Es kam der in Beispiel 1 genannte Rohmaterialversatz zur Anwendung mit der Abwandlung, daß die Rohstoffe mit einem Zusatz von 3 Gew.-% Schwefelpulver und 1,5 Gew.-% feinem Kohlenstoff erschmolzen wurden. Nach der Weiterverarbeitung, wie im Beispiel 1 beschrieben, zeigt der gebrannte Schwarzbandauftrag eine derart gute Opazität, daß die Silberschicht auf der Glasrückseite nicht mehr erkennbar ist.

Diese Paste ist für einen industriellen Einsatz verwendbar, da auch die restlichen Messdaten und spezifischen Eigenschaften wie Oberflächenbeschaffenheit, Haftvermögen, chemische Beständigkeit und Löteigenschaften den Forderungen entsprechen.

### Beispiel 3 (erfindungsgemäß)

Es kam der im Beispiel 1 genannte Rohmaterialversatz zur Anwendung mit der Abwandlung, daß die Rohstoffe mit einem Zusatz von 20 Gew.-% Zinksulfid erschmolzen wurden. Nach der Weiterverarbeitung, wie im Beispiel 1 beschrieben, zeigt der gebrannte Schwarzbandauftrag eine gute Opazität und Intensität des Farbtons, so daß der Silberauftrag unter Glas nicht mehr sichtbar ist.

### Beispiel 4 (erfindungsgemäß)

Es kam der im Beispiel 1 genannte Rohmaterialversatz zur Anwendung mit der Abwandlung, daß ein Drittel des anteiligen Bleioxidgehaltes der Mischung durch 19 % Bleisulfid ersetzt wurde und das Ganze mit 1,5 Gew.-% feinem Kohlenstoff erschmolzen wurde. Nach der Weiterverarbeitung, wie im Beispiel 1 beschrieben, zeigt der gebrannte Schwarzbandauftrag eine gute Opazität. Der Silberauftrag ist unter Glas nicht mehr sichtbar.

### Beispiel 5 (erfindungsgemäß)

Es kam die in Beispiel 2 mit 3 Gew.-% Schwefelpulver und 1,5 Gew.-% feinem Kohlenstoff erschmolzene Glasmatrix zur Anwendung, die bei der Weiterverarbeitung, wie in Beispiel 1 beschrieben, zusätzlich mit 5 Gew.-% Bleisulfid vermahlen und anschließend mit einem Ölmedium angepastet wird.

Der gebrannte Schwarzbandauftrag zeigt eine gute Opazität und Farbtiefe und der Silberauftrag ist unter Glas nicht mehr sichtbar.

## Patentansprüche

1. Schwarzglaspasten auf der Basis von bleihaltigen Borsilikatgläsern, dadurch gekennzeichnet, daß die Pasten gemahlene, bleihaltige Borsilikatgläser, die zusätzlich zu ihrer oxidischen Zusammensetzung noch Sulfide und/oder Polysulfide aufweisen, schwarze gemahlene Pigmente und bei Zimmertemperatur oder erhöhter Temperatur flüssige Medien enthalten.

2. Schwarzglaspasten gemäß Anspruch 1, dadurch gekennzeichnet, daß die Schwarzglaspasten 40 bis 75 Gew.-% bleihaltige Sulfid-modifizierte Borsilikatgläser, 10 bis 35 Gew.-% schwarze Pigmente und 15 bis 25 Gew.-% bei Zimmertemperatur oder erhöhter Temperatur flüssige Medien enthalten.

3. Schwarzglaspasten gemäß einem der Ansprüche 1 oder 2, dadurch gekennzeichnet, daß die Pasten zusätzlich 1 bis 10 Gew.-% dunkelfarbiger Schwermetallsulfide, deren thermische Dissoziation über 1.000°C liegt, enthalten.

4. Schwarzglaspasten gemäß einem der Ansprüche 1 bis 3, dadurch gekennzeichnet, daß der Anteil an Sulfiden und/oder Polysulfiden in den bleihaltigen Borsilikatgläsern 0,1 bis 12 Gew.-% beträgt.

5. Verfahren zur Herstellung von Schwarzglaspasten gemäß Anspruch 1 bis 4, dadurch gekennzeichnet, daß die den bleihaltigen Borsilikatgläsern zugrunde liegenden Ausgangsrohstoffe mit Metallsulfiden und/oder Schwefelpulver und feinem Kohlenstoff gemischt werden, anschließend das Gemisch geschmolzen wird, die so hergestellte Fritte zusammen mit schwarzen Pigmenten bis zu einer Kornfeinheit < 10 µm vermahlen und dieses gemahlene Produkt mit bei Zimmertemperatur oder erhöhter Temperatur flüssigen Medien zu einer Paste vermischt wird.

6. Verfahren gemäß Anspruch 5, dadurch gekennzeichnet, daß 5 bis 30 Gew.-% Schwermetallsulfide und/oder 0,5 bis 5 Gew.-% Schwefelpulver und 0,5 bis 2 Gew.-% feiner Kohlenstoff mit den entsprechenden Ausgangsrohstoffen der bleihaltigen Borsilikatgläser gemischt werden.

7. Verfahren gemäß einem der Ansprüche 5 oder 6, dadurch gekennzeichnet, daß die Rohstoffe gemeinsam mit den Metallsulfiden und/oder Schwefelpulver und feinem Kohlenstoff bei 1.200 bis 1.350°C in Abhängigkeit von der Zusammensetzung des Rohstoffgemisches geschmolzen werden.

8. Verfahren gemäß einem der Ansprüche 5 bis 7, dadurch gekennzeichnet, daß 40 bis 75 Gew.-% der Sulfid-modifizierten, bleihaltigen, gemahlenen Borsilikatgläser und 10 bis 35 Gew.-% der schwarzen, gemahlenen Pigmente mit 15 bis 25 Gew.-% der bei Zimmertemperatur oder erhöhter Temperatur flüssigen Medien, jeweils bezogen auf Gesamtgewicht der Paste, vermischt werden.

9. Verfahren gemäß einem der Ansprüche 5 bis 8, dadurch gekennzeichnet, daß zusätzlich 1 bis 10 Gew.-% dunkelfarbiger Schwermetallsulfide, deren thermische Dissoziation über 1.000°C liegt, bezogen auf das Gesamtgewicht der Paste, zur Mahlung gegeben werden.

10. Verwendung der Schwarzglaspasten gemäß Anspruch 1 bis 4 bei der Herstellung der schwarzen Ränder auf Verglasungen.

## Claims

1. Black glass pastes based on lead-containing borosilicate glasses, characterized in that the pastes contain ground lead-containing borosilicate glasses, which in addition to their oxidic composition include sulfides and/or polysulfides, black ground pigments and media which are liquid at room temperature or elevated temperature.

2. Black glass pastes as claimed in claim 1, characterized in that the black glass pastes contain 40 to 75% by weight lead-containing sulfide-modified borosilicate glasses, 10 to 35% by weight black pigments and 15 to 25% by weight media liquid at room temperature or elevated temperature.

3. Black glass pastes as claimed in claim 1 or 2, characterized in that the pastes additionally contain 1 to 10% by weight dark-colored heavy metal sulfides having a thermal dissociation temperature above 1,000°C.

4. Black glass pastes as claimed in any of claims 1 to 3, characterized in that the percentage content of sulfides and/or polysulfides in the lead-containing borosilicate glasses is from 0.1 to 12% by weight.

5. A process for the production of the black glass pastes claimed in claims 1 to 4, characterized in that the starting materials on which the lead-containing borosilicates glasses are based are mixed with metal sulfides and/or sulfur powder and fine carbon, the mixture is subsequently fused, the resulting frit is ground together with black pigments to a particle fineness of < 10 µm and the ground product is mixed with media liquid at room temperature of elevated temperature to form a paste.

6. A process as claimed in claim 5, characterized in that 5 to 30% by weight heavy metal sulfides and/or 0.5 to 5% by weight sulfur powder and 0.5 to 2% by weight fine carbon are mixed with the corresponding raw materials of the lead-containing borosilicate glasses.

7. A process as claimed in claim 5 or 6, characterized in that the raw materials are fused together with the metal sulfides and/or sulfur powder and fine carbon at a temperature of 1,200 to 1,350°C, depending on the composition of the mixture of raw materials.

8. A process as claimed in any of claims 5 to 7, characterized in that 40 to 75% by weight of the sulfide-modified, lead-containing ground borosilicate glasses and 10 to 35% by weight of the black ground pigments are mixed with 15 to 25% by weight of the media liquid at room temperature or elevated temperature, based on the total weight of the paste.

9. A process as claimed in any of claims 5 to 8, characterized in that 1 to 10% by weight, based on the total weight of the paste, of dark-colored heavy metal sulfides having a thermal dissociation temperature above 1,000°C are additionally added for grinding.

10. The use of the black glass pastes claimed in claims 1 to 4 in the production of the black edges on glazing.

## Revendications

1. Pâtes de verre noires à base de verres de borosilicate contenant du plomb caractérisées en ce que les pâtes contiennent du verre de borosilicate broyé, contenant du plomb, et qui contient en outre, en plus des oxydes qui la composent, encore des sulfures et/ou des polysulfures, des pigments broyés noirs et des milieux liquides à la température ambiante ou à des températures élevées.

2. Pâtes de verre noires selon la revendication 1, caractérisées en ce que les pâtes de verre noires contiennent 40 à 75 % en poids de verre de borosilicate modifié par 40 à 75 % en poids de sulfures contenant du plomb, 10 à 35 % en poids de pigments noirs et 15 à 25 % en poids de milieu liquide à la température ambiante ou à des températures élevées.

3. Pâtes de verre noires selon l'une des revendications 1 ou 2, caractérisées en ce que les pâtes contiennent en outre 1 à 10 % en poids de sulfures de métaux lourds de couleur foncée, dont le point de dissociation thermique se situe au-delà de 1000°C.

4. Pâtes en verre noires selon l'une des revendications 1 à 3, caractérisées en ce que la proportion en des sulfures et/ou en des polysulfures est de 0,1 à 12 % en poids dans les verres de borosilicate contenant du plomb.

5. Procédé de production de pâtes de verre noires selon la revendication 1 à 4, procédé caractérisé en ce qu'on mélange les matières brutes de départ qui sont à la base des verres de borosilicate contenant du plomb avec des sulfures de métaux et/ou avec de la poudre de soufre et du carbone fin, on fait fondre ensuite le mélange, on broie la fritte ainsi produite, avec des pigments noirs, jusqu'à obtenir une finesse de grains inférieure à 10 µm et l'on mélange ce produit broyé avec des milieux liquides à la température ambiante et à la température élevée, pour former une pâte.

6. Procédé selon la revendication 5, caractérisé en ce qu'on mélange 5 à 30 % en poids de sulfures de métaux lourds et/ou 0,5 à 5 % en poids de poudre de soufre et 0,5 à 2 % en poids de carbone fin avec les matière brutes de départ correspondantes pour l'obtention de verre de borosilicate contenant du plomb.

7. Procédé selon l'une des revendications 5 ou 6, caractérisé en ce qu'on soumet les matières premières, avec les sulfures de métaux et/ou la poudre de soufre, et du carbone fin, à une fusion opérée à 1200 jusqu'à 1350°C selon la composition du mélange des matières premières.

8. Procédé selon l'une des revendications 5 à 7, caractérisé en ce qu'on mélange 40 à 75 % en poids des verres de borosilicate broyé, contenant du plomb, modifié par 40 à 75 % en poids de sulfures, et 10 à 35 % en poids des pigments broyés, noirs, avec 15 à 25 % en poids de milieux liquides à la température ambiante ou aux températures élevées, les proportions étant à chaque fois rapportées au poids total de la pâte.

9. Procédé selon l'une des revendications 5 à 8, caractérisé en ce qu'on ajoute lors du broyage 1 à 10 % en poids supplémentaires de sulfures de métaux lourds de couleur foncée, dont la dissociation thermique se situe au-delà de 1000°C, la proportion étant rapportée au poids total de la pâte.

10. Utilisation des pâtes de verre noires selon la revendication 1 à 4, pour la production de bandes noires sur des vitrages.
